# EUROPÄISCHE PATENTSCHRIFT

(11) **EP 3 460 262 B1**
(45) Veröffentlichungstag und Bekanntmachung des Hinweises auf die Patenterteilung: **17.02.2021**
(21) Anmeldenummer: 18194291.3
(22) Anmeldetag: 13.09.2018
(51) Int. Cl.: F16B 7/04

(54) **PROFILVERBINDER**
PROFILE CONNECTOR
CONNECTEUR DE PROFILÉS

(30) Priorität: 26.09.2017 CH 11762017
(43) Veröffentlichungstag der Anmeldung: 27.03.2019
(73) Patentinhaber: Kanya AG, 8630 Rüti (CH)
(72) Erfinder: Pulfer, Markus, 8635 Dürnten (CH)
(74) Vertreter: Kaminski Harmann Patentanwälte AG (Schweiz)

(56) Entgegenhaltungen:
- EP-A1- 1 729 018
- EP-A2- 0 292 254
- WO-A1-98/09085
- CN-A- 102 128 192

## Beschreibung

Die Erfindung bezieht sich auf Profilverbinder nach dem Oberbegriff des Anspruchs 1. Profilverbinder werden zum Verbinden von Profilen eingesetzt. Wenn beispielsweise mit Metall-Profilen insb. Aluminium-Profilen eine Tragkonstruktion für daran anzuordnende plattenförmige Elemente erstellt wird, so verlaufen lange Längsprofile in einer ersten Richtung und zwischen benachbarten Längsprofilen werden in einer zweiten Richtung quer zur ersten Richtung kurze Verbindungsprofile eingesetzt. Die Verbindungsprofile halten die Längsprofile im gewünschten Abstand zueinander. Zumindest in Teilbereichen einer Tragkonstruktion sind tragende Aussenflächen von Längsprofilen im Wesentlichen in einer Ebene angeordnet, so dass die daran angeordneten Elemente an eine zusammenhängende ebene Teilfläche anschliessen.

Gängige Längsprofile umfassen zwei voneinander abgewandte Verbindungs-Seitenflächen mit Längsnuten, die bei der Seitenfläche einen Öffnungsspalt aufweisen, der quer zur Profillängsrichtung schmaler ist, als der im Profil daran anschliessende Freiraum. Entsprechend können in Längsnuten angeordnete Nutsteine bzw. Nutanker so mit seitlich zu den Längsprofilen angeordneten Verbindungsprofilen verbunden werden, dass die Tragkonstruktion aus Längs- und Verbindungsprofilen stabil zusammenhält.

EP 1 729 018 B1 beschreibt eine Lösung zum Verbinden von Profilen, bei der eine Hülse mit ihrem Aussengewinde in den zentralen Hohlraum eines Profils eingeschraubt ist und eine Spannschraube in einem Innengewinde der Hülse einen in einer Längsnut eines anderen Profils angeordneten Nutstein mit dem anderen Profil gegen das eine Profil in Anschlag bringen kann, wobei der zentrale Hohlraum des einen Profils, bzw. der Kopf der Spannschraube, über eine im einen Profil ausgebildete Schlüsselöffnung zugänglich ist. Der Nachteil dieser Lösung besteht darin, dass beim zu verbindenden Endbereich des einen Profils eine Schlüsselöffnung ausgebildet werden muss.

CH 645 957 beschreibt eine Lösung zum Verbinden von Profilen, die bei der zu verbindenden Stirnseite eines Profils eine Führungshülse umfasst, welche durch eine über seitliche Bohrungen in dieses Profil eingesetzte Arretierhülse im Profil gehalten wird. Ein Verbindungsanker mit einem in eine Längsnut des anderen Profils einsetzbaren Kopf ist in der Führungshülse geführt und wird mit einer in eine konische Bohrung des Verbindungsankers eingreifenden, in einem Innengewinde der Arretierhülse geführten Spitzschraube an den klemmenden Anschlag gebracht. Der Nachteil dieser Lösung besteht darin, dass beim zu verbindenden Endbereich des einen Profils seitliche Bohrungen für die Arretierhülse ausgebildet werden müssen.

DE 202 10 133 U1 beschreibt die Verbindung von Profilen mit Basisteilen, die mit einer in der Längsbohrung eines Profils festgeschraubten Schraube an diesem Profil befestigt werden. Die Basisteile werden mit zwei seitlich am Basisteil angeordneten Nutsteinen an der Längsnut eines anderen Profils festgeklemmt. Zum Festklemmen werden zwei über die Längsnuten des einen Profils zugängliche Schrauben in die Nutsteine eingeschraubt. Der Nachteil dieser Lösungen besteht darin, dass mehrere Einzelteile richtig eingesetzt werden müssen. Die Schritte für das Erstellen der Verbindung sind aufwendig und es können Teile fehlen oder verloren gehen.

CH 692 090 A5 beschreibt eine ähnliche Lösung, wie die in DE 202 10 133 U1 beschriebenen Lösungen mit Basisteilen, wobei die Befestigung des Basisteils an der Längsbohrung des einen Profils über eine Schraube erzielt wird, welche in eine in der Längsbohrung angeordnete Hülse mit Spreizbeinen eingeschraubt wird. Die Befestigung des Basisteils an einer Längsnut des anderen Profils erfolgt mit zwei Schrauben, die an in der Längsnut angeordneten Muttern festgeschraubt werden. Auch hier sind die Schritte für das Erstellen der Verbindung aufwendig und es können Teile fehlen oder verloren gehen.

EP 1 259 738 B1, DE 203 02 751 U1 und DE 41 42 273 A1 beschreiben Lösungen bei denen eine Klemmeinheit in eine Längsnut des einen Profils eingesetzt wird. Eine Spannschraube erstreckt sich in Richtung der Längsnut des einen Profils durch die Klemmeinheit zu einem Nutstein in der Längsnut des anderen Profils. Die Spannschraube drückt mit einem konischen Bereich Klemmelemente der Klemmeinheit klemmend an die Nutränder und zieht den Nutstein mit dem anderen Profil an einen Anschlag gegen das eine Profil. Der Nachteil dieser Lösungen besteht darin, dass mehrere Einzelteile richtig eingesetzt werden müssen. Zudem ist das Festschrauben der in der Längsnut angeordneten Spannschraube schwierig, weil der Zugang mit einem Werkzeug zur Spannschraube nur durch den schmalen Eintrittsspalt in der Längsnut möglich ist. Die Schritte für das Erstellen der Verbindung sind aufwendig und es können Teile fehlen oder verloren gehen.

Die erfindungsgemässe Aufgabe besteht nun darin, eine einfach aufgebaute Profilverbindung zu finden, die einfach erstellt werden kann und bei der möglichst keine Teile beim Erstellen der Profilverbindung fehlen können. Vorzugsweise soll die Profilverbindung ohne spezielle Bearbeitung der Profile eingesetzt werden können und insbesondere auch dann, wenn die über eine Stirnseite mit einem Längsprofil zu verbindenden Profile nicht präzise positionierte und ausgebildete Stirnseiten aufweisen.

Die Aufgabe wird durch die Merkmale des Patentanspruchs 1 gelöst. Die abhängigen Patentansprüche beschreiben alternative bzw. vorteilhafte Ausführungsvarianten, welche weitere Aufgaben lösen.

Der erfindungsgemässe Profilverbinder umfasst ein sich entlang einer Hülsenachse erstreckendes Hülsenteil und ein im Hülsenteil entlang der Hülsenachse bewegbar gelagertes Bolzenelement. Das Bolzenelement umfasst einen Nutanker und ein Presselement. Eine Betätigungseinrichtung des Profilverbinders macht das Bolzenelement in Richtung der Hülsenachse relativ zum Hülsenteil verstellbar. Das Hülsenteil umfasst in Richtung der Hülsenachse aneinander anschliessend einen Sockelabschnitt und einen Einsteckabschnitt. Der Sockelabschnitt umfasst quer zur Hülsenache eine erste Anschlagsfläche für ein erstes Profil und eine zweite Anschlagsfläche für ein zweites Profil und dazwischen einen Bereich mit der Betätigungseinrichtung zum Bewegen des Bolzenelements. Der Einsteckabschnitt des Hülsenteils ist in einen sich in Profillängsrichtung erstreckenden Hohlraum des zweiten Profils einsteckbar und beim Einsteckabschnitt ist mindestens ein vom Presselement quer zur Hülsenachse pressbares Spreizelement der Befestigungseinrichtung ausgebildet. Das mindestens eine Spreizelement und das Presselement sind als Teile einer Befestigungseinrichtung so ausgebildet, dass das mindestens eine Spreizelement vom Presselement quer zur Hülsenachse pressbar ist. Diese Pressung quer zur Hülsenachse sichert eine Halteverbindung zwischen dem Einsteckabschnitt und dem zweiten Profil, in das der Einsteckabschnitt eingesteckt ist. Zum Verbinden eines ersten Profils mit einem zweiten Profil macht die Betätigungseinrichtung das Bolzenelement in Richtung der Hülsenachse so verstellbar, dass gleichzeitig der Nutanker und das mindestens eine Spreizelement mit den entsprechenden Profilen in Halteverbindungen gelangen.

Gemäss einer bevorzugten Ausführungsform umfasst das Presselement eine von der Hülsenachse abgewandte Pressfläche, deren Abstand zur Hülsenachse gegen das freie Ende des Presselements hin abnimmt. Das Spreizelement ist am Hülsenteil ausgebildet und umfasst eine der Hülsenachse zugewandte, an die Pressfläche angepasste Kontaktfläche, deren Abstand zur Hülsenachse gegen das freie Ende des Spreizelements hin ebenfalls abnimmt. Bei der Bewegung des Presselementes im Hülsenteil in der Richtung gegen das freie Ende des Presselementes und des Spreizelementes presst die Pressfläche die Kontaktfläche etwas von der Hülsenachse weg, was zum Festklemmen des Einsteckabschnitts im zweiten Profil führt.

Um mit einer einfach erzielbaren Bewegung des Presselementes ein besonders sicheres Festpressen des mindestens einen Spreizelementes sicherstellen zu können, wird die Ausrichtung der Pressfläche und der Kontaktfläche in einem vorgegebenen Bereich gewählt. In einer Schnittebene mit der Hülsenachse schliessen die Schnittlinien der Pressfläche und die Kontaktfläche zur Hülsenachse einen Winkel im Bereich von 2° bis 10°, vorzugsweise von 4° bis 8° ein.

Um ein gutes Festklemmen des mindestens einen Spreizelementes im zweiten Profil sicherzustellen, weist das mindestens eine Spreizelement von der Hülsenachse weg nach aussen stehende Eingriffselemente auf, die vorzugsweise in einer entlang der Hülsenachse ausgerichteten Schnittebene aussenliegende Spitzen aufweisen und insbesondere als Umfangssegmente eines Umfangs um die Hülsenachse ausgebildet sind.

Bei einer besonders bevorzugten Ausführungsform weist der Einsteckabschnitt mindestens zwei, vorzugsweise aber vier, um die Hülsenachse angeordnete Spreizelemente auf, die durch Längsspalte voneinander abgetrennt sind.

Es versteht sich von selbst, dass das Presselement das mindestens eine Spreizelement auch anders betätigen kann. Beispielsweise kann bei der freien Stirnseite des Presselements ein elastisch verformbarer Abschnitt angeordnet sein, der mit dem Presselement an einen stirnseitigen Abschluss des Hülsenteils gepresst und dabei radial von der Hülsenachse weg ausgedehnt wird. Die radiale Ausdehnung presst das mindestens eine Spreizelement quer zur Hülsenachse nach aussen und sichert dabei eine Halteverbindung zwischen dem Einsteckabschnitt und dem zweiten Profil. Gegebenenfalls wird auf ein am Hülsenteil angeordnetes Spreizelement verzichtet und der elastisch verformbare Abschnitt bildet selbst das Spreizelement.

Der Nutanker ist in einer ersten Drehausrichtung in eine Längsnut des ersten Profils einführbar und in einer zweiten Drehausrichtung in der Längsnaht gehalten. Dazu weist der Kopf des Nutankers auf der stirnseitigen Ansicht in einer ersten Richtung eine Ausdehung auf, die etwas kleiner ist als die Eintrittsbreite der Längsnut. In der um 90° zur ersten Richtung verdrehten zweiten Richtung weist der Kopf des Nutankers eine Ausdehnung auf, die etwas grösser ist als die Eintrittsbreite der Längsnut. Der Kopf des Nutankers steht nur soweit über die erste Anschlagsfläche des Hülsenteils vor, dass der Nutanker gut in eine Längsnut eingesetzt werden kann.

Die Betätigungseinrichtung ist so ausgebildet und am Sockelabschnitt des Hülsenteils angeordnet, dass sie bei der in der Längsnut gehaltenen Ausrichtung des Nutankers zugänglich ist. Die Betätigungseinrichtung macht das Bolzenelement in Richtung der Hülsenachse verstellbar, wobei die für das Erzielen der Halteverbindung des Nutankers an der Längsnut des ersten Profils nötige Bewegung an die Bewegung angepasst ist, die für die Halteverbindung des mindestens einen Spreizelements im zweiten Profil nötig ist.

Die Betätigungseinrichtung ist so ausgebildet, dass sie die nötige Relativbewegung des Bolzenelements im Hülsenteil so gewährleisten kann, dass beide Halteverbindungen gleichzeitig erzielt werden können. In einer bevorzugten Ausführungsform umfasst die Betätigungseinrichtung im Sockelabschnitt des Hülsenteils eine quer, insbesondere senkrecht, zur Hülsenachse verlaufende Bohrung mit einem Gewinde. In dieses Gewinde ist eine Stellschraube eingesetzt, mit der die Bewegung des Bolzenelements im Hülsenteil bewirkt werden kann. Dazu umfasst die Stellschraube vorzugsweise ein konisch verengtes freies Ende und das Bolzenelement eine an die Konusform der Stellschraube angepasste Vertiefung, in welche die Stellschraube eingreift. In einer Schnittebene mit der Hülsenachse und der Längsachse der Stellschraube liegt eine Presslinie des konisch verengten Endes der Stellschraube an einer im Wesentlichen gleich ausgerichteten Linie der Vertiefung im Bolzenelement an. Um eine optimale Übertragung der Bewegung der Stellschraube auf die Bewegung des Bolzenteils zu erzielen, liegt der Winkel zwischen der Presslinie und der Hülsenachse vorzugsweise im Bereich von 35° bis 55°, insbesondere im Bereich von 42° bis 48°.

Es versteht sich von selbst, dass auch andere Ausführungsformen der Betätigungseinrichtung möglich sind. Beispielsweise kann das Bolzenelement mindestens einen radial nach aussen stehenden Stift umfassten, der in einem Längsspalt des Hülsenteils geführt ist und soweit nach aussen steht, dass er von einem im Bereich des Sockelabschnitts auf dem Hülsenteil angeordneten Mitnehmer bewegt werden kann. Wenn am Hülsenteil im Bereich des Sockelabschnitts ein um die Hülsenachse angeordnetes Aussengewinde ausgebildet wird, so kann der Mitnehmer als Bewegungsmutter auf diesem Aussengewinde angeordnet werden. Diese Bewegungsmutter wird so ausgebildet, dass sie mit einem Betätigungswerkzeug mit kleinem Aufwand soweit bewegt werden kann, dass das Bolzenelement über den mindestens einen von der Bewegungsmutter bewegten Stift in die Position gebracht wird, in der die beiden Halteverbindungen erzielt werden.

Bei einem erfindungsgemässen Profilverbinder ist die Betätigungseinrichtung nach dem Einsetzen des Bolzenelements in das Hülsenteil so einstellbar, dass alle Elemente des Profilverbinders miteinander verbunden sind. Der zusammengestellte Profilverbinder ist mit dem Nutanker in das erste Profil und mit dem Einsteckabschnitt in das zweite Profil einsetzbar und anschliessend macht die Betätigungseinrichtung die beiden Halteverbindungen erzielbar. Besonders vorteilhaft ist eine Ausführungsform, bei welcher der Profilverbinder aus drei einteiligen Teilen besteht, aus einem einteiligen Hülsenteil, einem einteiligen Bolzenelement und einem am Hülsenteil verstellbar gelagerten einteiligen Betätigungsteil der Betätigungseinrichtung.

Zum Verbinden der Profile muss lediglich der Profilverbinder eingesetzt werden und mit der Betätigungseinrichtung können dann ohne Verwendung von weiteren Teilen die Halteverbindungen zu beiden Profilen erzielt werden. Die Schritte für das Erstellen der Verbindung sind sehr einfach und es können keine Teile fehlen oder verloren gehen. Durch die Anordnung der Betätigungseinrichtung am Sockelabschnitt des Hülsenteils sind ein optimaler Zugang und damit eine einfache Betätigung gewährleistet. Die beiden Anschlagsflächen des Sockelabschnitts stellen sicher, dass die beiden mit dem Profilverbinder zu verbindenden Profile den Zugang zur Betätigungseinrichtung nicht einschränken.

Ein weiterer Vorteil des erfindungsgemässen Profilverbinders besteht darin, dass lediglich ein Element der Betätigungseinrichtung, vorzugsweise eine Stellschrauben, betätigt werden muss. Zudem müssen die kurzen Verbindungsprofile, bzw. die zweiten Profile, zwischen langen Längsprofilen, bzw. den ersten Profilen, nicht genau abgelängt sein. Wenn ein kurzes Verbindungsprofil etwas zu kurz ist, so wird der Einsteckabschnitt des Hülsenteils des Profilverbinders etwas weniger weit in das Verbindungsprofil eingeschoben. Die Halteverbindungen werden trotzdem sicher erzielt.

Die erfindungsgemässen Profilverbinder eignen sich besonders gut zum Erstellen von Tragkonstruktionen auf Baustellen. Die kurzen Verbindungsprofile müssen lediglich grob auf die gewünschte Länge abgetrennt werden. Die beim Abtrennten erzeugte Schnittfläche muss nicht senkrecht zur Profillängsachse ausgerichtet sein. Zum Erzielen der Halteverbindungen an den kurzen Verbindungsprofilen ist keine zusätzliche Bearbeitung der kurzen Verbindungsprofile nötig.

Wenn hohe ästhetische Ansprüche an die Erscheinung der Tragkonstruktion und insbesondere an die Erscheinung der Verbindungen gestellt werden, so kann der Sockelabschnitt des Hülsenelements so ausgebildet werden, dass nach dem Erstellen einer Verbindung eine an die Aussenkontur der kurzen Verbindungsprofile angepasste Abdeckung auf den Sockelabschnitt des Profilverbinders aufgesteckt werden kann.

Die Zeichnungen erläutern die Erfindung anhand eines Ausführungsbeispiels, auf das sie aber nicht eingeschränkt ist. Dabei zeigen
- Fig. 1: eine Darstellung des Profilverbinders mit aufgeschnittenem Hülsenteil,
- Fig. 2: einen Längsschnitt des Bolzenelements,
- Fig. 3: eine Draufsicht des Profilverbinders,
- Fig. 4: eine perspektivische Darstellung des Profilverbinders und
- Fig. 5: eine Schnittdarstellung des Profilverbinders mit den zwei daran angeschlossenen Profilen.

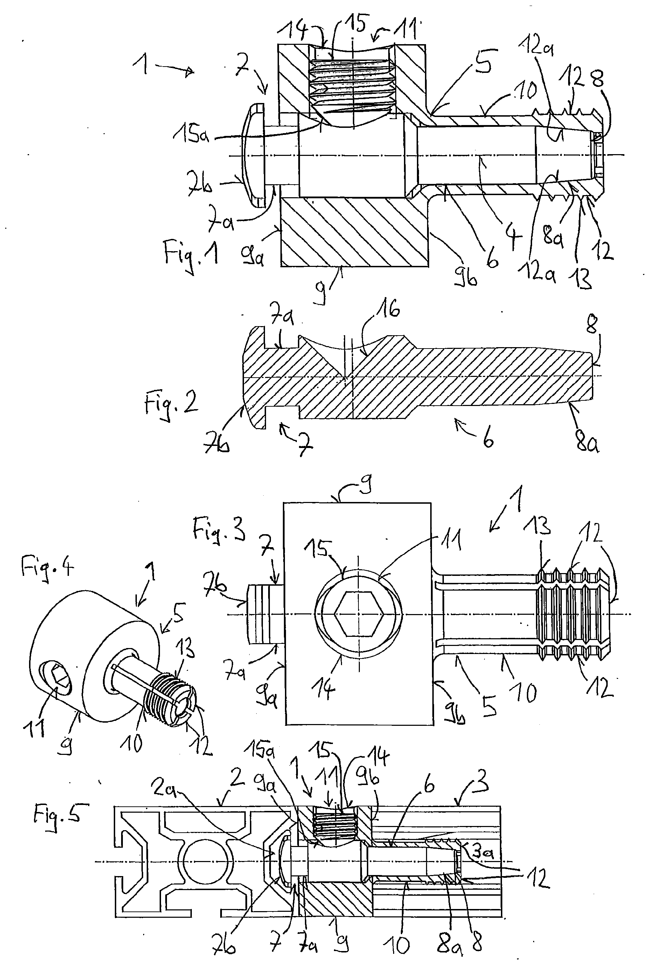

Die Fig. 1 bis 4 zeigen den Profilverbinder 1, mit welchem gemäss Fig. 5 ein erstes Profil 2 und ein zweites Profil 3 verbunden werden. Der Profilverbinder 1 umfasst ein sich entlang einer Hülsenachse 4 erstreckendes Hülsenteil 5 und ein im Hülsenteil 5 entlang der Hülsenachse 4 bewegbar gelagertes Bolzenelement 6. Das Bolzenelement 6 umfasst einen Nutanker 7 und ein Presselement 8.

Das Hülsenteil 5 weist in Richtung der Hülsenachse 4 aneinander anschliessend einen Sockelabschnitt 9 und einen Einsteckabschnitt 10 auf. Der Sockelabschnitt 9 umfasst quer zur Hülsenache 4 ausgerichtet eine erste Anschlagsfläche 9a für das erste Profil 2 und eine zweite Anschlagsfläche 9b für das zweite Profil 3 und dazwischen einen Bereich mit einer Betätigungseinrichtung 11 zum Bewegen des Bolzenelements 6.

Der Einsteckabschnitt 10 des Hülsenteils 5 ist in einen sich in Profillängsrichtung erstreckenden Hohlraum 3a des zweiten Profils 3 einsteckbar und umfasst mindestens ein Spreizelement 12. Die dargestellte Ausführungsform umfasst vier Spreizelemente 12, die durch Längsspalten voneinander abgeteilt um die Hülsenachse 4 angeordnet sind. Die Spreizelemente 12 und das Presselement 8 sind Teile einer Befestigungseinrichtung, welche eine Halteverbindung zwischen dem Einsteckabschnitt 10 und dem zweiten Profil 3 erzielbar macht.

Das Presselement 8 umfasst eine von der Hülsenachse 4 abgewandte Pressfläche 8a, deren Abstand zur Hülsenachse 4 gegen das freie Ende des Presselements 8 hin abnimmt. Die Spreizelemente 12 umfassen der Hülsenachse 4 zugewandte, an die Pressfläche 8a angepasste Kontaktflächen 12a, deren Abstand zur Hülsenachse 4 gegen das freie Ende der Spreizelemente 12 hin ebenfalls abnimmt. Bei der Bewegung des Presselementes 8 im Hülsenteil 5 in der Richtung gegen das freie Ende des Presselementes 5 und der Spreizelemente 12 presst die Pressfläche 8a die Kontaktflächen 12a etwas von der Hülsenachse 4 weg, was zum Festklemmen des Einsteckabschnitts 10 im zweiten Profil 3 führt.

In der dargestellten Ausführungsform wird ein besonders sicheres Festpressen der Spreizelemente dadurch sichergestellt, dass in einer Schnittebene mit der Hülsenachse die Schnittlinien der Pressfläche 8a und der Kontaktflächen zur Hülsenachse 4 einen Winkel von im Wesentlichen 5° einschliessen. Dieser Winkel wird an die für das Festklemmen des Nutankers 7 vorgesehene Bewegung des Bolzenteils 6 und an den für das Einstecken des Einsteckabschnitts 10 vorgesehenen Freiraum angepasst. Wenn das Bolzenelement 6 bis zum Erzielen der Halteverbindungen zu den beiden Profilen 2 und 3 eine grössere Bewegung ausführen soll, so wird der Winkel kleiner gewählt und für eine kleinere Bewegung wird der Winkel grösser gewählt.

Um ein gutes Festklemmen der Spreizelemente 12 im zweiten Profil 3 sicherzustellen, weisen die Spreizelemente 12 von der Hülsenachse 4 weg nach aussen stehende Eingriffselemente 13 auf, die in einer entlang der Hülsenachse 4 ausgerichteten Schnittebene aussenliegende Spitzen aufweisen und als Umfangssegmente um die Hülsenachse 4 ausgebildet sind.

Der Nutanker 7 ist an dem vom Presselement 8 abgewandten anderen Ende des Bolzenelementes 6 ausgebildet und umfasst einen Hals 7a sowie einen Kopf 7b. Der Kopf 7b ist in einer ersten Drehausrichtung in eine Längsnut 2a des ersten Profils 2 einführbar und in einer zweiten Drehausrichtung in der Längsnaht 2a gehalten. Dazu weist der Kopf 7b des Nutankers 7 in einer ersten Richtung quer zur Hülsenachse 4 eine Ausdehung auf, die etwas kleiner ist als die Eintrittsbreite der Längsnut 2a. In der um 90° zur ersten Richtung verdrehten zweiten Richtung weist der Kopf 7b eine Ausdehnung auf, die etwas grösser ist als die Eintrittsbreite der Längsnut 2a. Beim Einsetzen des Kopfes 7b in die Längsnut 2a steht der Kopf des Nutankers 7 nur soweit über die erste Anschlagsfläche 9a des Hülsenteils 5 vor, dass er gut in die Längsnut 2a eingesetzt werden kann. Der Freiraum zwischen dem Kopf 7b und der ersten Anschlagsfläche 9a, nach dem Abzug der Mächtigkeit des Randes der Längsnut 2a entspricht der nötigen Bewegung des Bolzenelements 6 bis zum Erzielen der beiden Halteverbindungen zu den beiden Profilen 2 und 3. Wenn der Freiraum grösser ist, muss das Bolzenelement 6 weiter bewegt werden und wenn der Freiraum kleiner ist, wird ein kleinerer Bolzenweg benötigt.

Die Betätigungseinrichtung 11 ist so ausgebildet und am Sockelabschnitt 9 des Hülsenteils 5 angeordnet, dass sie bei der in der Längsnut 2a gehaltenen Ausrichtung des Nutankers 7 zugänglich ist. Die Betätigungseinrichtung 11 macht das Bolzenelement 6 in Richtung der Hülsenachse 4 verstellbar, wobei die für das Erzielen der Halteverbindung des Nutankers 7 an der Längsnut 2a des ersten Profils 2 nötige Bewegung an die Bewegung angepasst ist, die für die Halteverbindung der Spreizelemente 12 im zweiten Profil 3 nötig ist.

In der dargestellten Ausführungsform umfasst die Betätigungseinrichtung 11 im Sockelabschnitt 9 des Hülsenteils 5 eine senkrecht zur Hülsenachse 4 verlaufende Bohrung 14 mit einem Gewinde. In dieses Gewinde ist eine Stellschraube 15 eingesetzt, mit der die Bewegung des Bolzenelements 6 im Hülsenteil 5 bewirkt werden kann. Dazu umfasst die Stellschraube 15 ein konisch verengtes freies Ende 15a und das Bolzenelement 6 eine an die Konusform der Stellschraube 15 angepasste Vertiefung 16, in welche die Stellschraube 15 eingreift. In einer Schnittebene mit der Hülsenachse 4 und der Längsachse der Stellschraube 15 liegt eine Presslinie des konisch verengten Endes 15a der Stellschraube 15 an einer im Wesentlichen gleich ausgerichteten Linie der Vertiefung 16 im Bolzenelement 6 an. Um eine optimale Übertragung der Bewegung der Stellschraube auf die Bewegung des Bolzenteils 6 zu erzielen, beträgt der Winkel zwischen der Presslinie und der Hülsenachse 4 in der dargestellten Ausführungsform 45°.

## Patentansprüche

1. Profilverbinder (1) mit einem in eine Längsnut (2a) eines ersten Profils (2) einsetzbaren Nutanker (7), einem einen Abschnitt des Nutankers (7) aufnehmenden, sich entlang einer Hülsenachse (4) erstreckenden Hülsenteil (5), einer Betätigungseinrichtung (11) zum Festsetzen des Nutankers (7) am ersten Profil (2) und einer Befestigungseinrichtung zum Erzeugen einer Halteverbindung zwischen dem Hülsenteil (5) und einem quer zum ersten Profil (2) verlaufenden zweiten Profil (3), wobei der Nutanker (7) in einer ersten Drehausrichtung in die Längsnut (2a) einführbar und in einer zweiten Drehausrichtung in der Längsnut (2a) gehalten ist, **dadurch gekennzeichnet, dass** das Hülsenteil (5) in Richtung der Hülsenachse (4) aneinander anschliessend einen Sockelabschnitt (9) und einen Einsteckabschnitt (10) umfasst, der Sockelabschnitt (9) quer zur Hülsenachse (4) eine erste Anschlagsfläche (9a) für das erste Profil (2), eine zweite Anschlagsfläche (9b) für das zweite Profil (3) und dazwischen einen Bereich mit der Betätigungseinrichtung (11) umfasst, die Befestigungseinrichtung ein Presselement (8) umfasst, der Nutanker (7) und das Presselement (8) an einem im Hülsenteil (5) entlang der Hülsenachse (4) bewegbar gelagerten Bolzenelement (6) ausgebildet sind, der Einsteckabschnitt (10) des Hülsenteils (5) in einen Hohlraum des zweiten Profils (3) einsteckbar ist, beim Einsteckabschnitt (10) mindestens ein vom Presselement (8) quer zur Hülsenachse (4) pressbares Spreizelement (12) der Befestigungseinrichtung ausgebildet ist und die Betätigungseinrichtung (11) beim Verbinden des ersten Profils (2) mit dem zweiten Profil (3) das Bolzenelement (6) in Richtung der Hülsenachse (4) so verstellbar macht, dass gleichzeitig der Nutanker (7) und das mindestens eine Spreizelement (12) mit den entsprechenden Profilen (2, 3) in Halteverbindungen gelangen.

2. Profilverbinder (1) nach Anspruch 1, **dadurch gekennzeichnet, dass** das Presselement (8) eine von der Hülsenachse (4) abgewandte Pressfläche (8a) umfasst, deren Abstand zur Hülsenachse (4) gegen das freie Ende des Presselements (8) hin abnimmt und dass das mindestens eine Spreizelement (12) am Hülsenteil (5) ausgebildet ist sowie eine der Hülsenachse (4) zugewandte, an die Pressfläche (8a) angepasste Kontaktfläche (12a) umfasst, deren Abstand zur Hülsenachse (4) gegen das freie Ende des Spreizelements (12) hin ebenfalls abnimmt, wobei bei der Bewegung des Presselementes (8) im Hülsenteil (5) in der Richtung gegen das freie Ende des Presselementes (8) die Pressfläche (8a) die Kontaktfläche (12a) etwas von der Hülsenachse (4) weg presst, was zum Festklemmen des Einsteckabschnitts (10) im zweiten Profil (3) führt.

3. Profilverbinder (1) nach Anspruch 2, **dadurch gekennzeichnet, dass** in einer Schnittebene mit der Hülsenachse (4) die Schnittlinien der Pressfläche (8a) und der Kontaktfläche (12a) zur Hülsenachse (4) einen Winkel im Bereich von 2° bis 10°, vorzugsweise von 4° bis 8°, einschliessen.

4. Profilverbinder (1) nach einem der Ansprüche 1 bis 3, **dadurch gekennzeichnet, dass** der Einsteckabschnitt (10) mindestens zwei, vorzugsweise aber vier, um die Hülsenachse (4) angeordnete Spreizelemente (12) aufweist, die durch Längsspalte voneinander abgetrennt sind.

5. Profilverbinder (1) nach einem der Ansprüche 1 bis 4, **dadurch gekennzeichnet, dass** die Betätigungseinrichtung (11) im Sockelabschnitt (9) des Hülsenteils (5) eine quer, insbesondere senkrecht, zur Hülsenachse (4) verlaufende Bohrung (14) mit einem Gewinde und in diesem Gewinde eine auf das Bolzenelement (6) wirkende Stellschraube (15) umfasst.

6. Profilverbinder (1) nach Anspruch 5, **dadurch gekennzeichnet, dass** die Stellschraube (15) vorzugsweise ein konisch verengtes freies Ende (15a) und das Bolzenelement (6) eine an die Konusform der Stellschraube (15) angepasste Vertiefung (16) umfasst, wobei in einer Schnittebene mit der Hülsenachse (4) und der Längsachse der Stellschraube (15) eine Presslinie des konisch verengten Endes (15a) der Stellschraube (15) an einer im Wesentlichen gleich ausgerichteten Linie der Vertiefung (16) anliegt.

7. Profilverbinder (1) nach Anspruch 6, **dadurch gekennzeichnet, dass** der Winkel zwischen der Presslinie und der Hülsenachse (4) im Bereich von 35° bis 55°, vorzugsweise aber im Bereich von 42° bis 48° liegt.

8. Profilverbinder (1) nach einem der Ansprüche 1 bis 7, **dadurch gekennzeichnet, dass** die Betätigungseinrichtung (11) bei in das Hülsenelement (5) eingesetztem Bolzenelement (6) so einstellbar ist, dass alle Elemente des Profilverbinders (1) miteinander verbunden sind, wobei der zusammengestellte Profilverbinder (1) mit dem Nutanker (7) in das erste Profil (2) und mit dem Einsteckabschnitt (10) in das zweite Profil (3) einsetzbar und anschliessend die Betätigungseinrichtung (11) zur Erzielung der beiden Halteverbindungen betätigbar ist.

9. Profilverbinder (1) nach einem der Ansprüche 1 bis 8, **dadurch gekennzeichnet, dass** der Profilverbinder (1) aus drei einteiligen Teilen besteht, aus dem Hülsenteil (5), dem Bolzenelement (6) und einem am Hülsenteil (5) verstellbar gelagerten Betätigungsteil der Betätigungseinrichtung (11).

## Claims

1. Profile connector (1) comprising a slot anchor (7) which can be inserted into a longitudinal slot (2a) of a first profile (2), a sleeve part (5) which extends along a sleeve axis (4) and receives a portion of the slot anchor (7), an actuating device (11) for securing the slot anchor (7) to the first profile (2), and a fastening device for creating a retaining connection between the sleeve part (5) and a second profile (3) that extends transversely to the first profile (2), wherein the slot anchor (7) can be introduced into the longitudinal slot (2a) in a first rotational orientation and is retained in the longitudinal slot (2a) in a second rotational orientation, **characterized in that** the sleeve part (5) comprises, adjoining one another in the direction of the sleeve axis (4), a base portion (9) and an insertion portion (10), the base portion (9) comprises, transversely to the sleeve axis (4), a first abutment surface (9a) for the first profile (2), a second abutment surface (9b) for the second profile (3), and therebetween a region having the actuating device (11), the fastening device comprises a pressing element (8), the slot anchor (7) and the pressing element (8) are formed on a bolt element (6) which is mounted in the sleeve part (5) in such a way as to be movable along the sleeve axis (4), the insertion portion (10) of the sleeve part (5) can be inserted into a cavity of the second profile (3), at least one spreading element (12) of the fastening device is formed on the insertion portion (10) and can be pressed transversely to the sleeve axis (4) by the pressing element (8), and the actuating device (11), when the first profile (2) is connected to the second profile (3), makes the bolt element (6) movable in the direction of the sleeve axis (4) such that the slot anchor (7) and the at least one spreading element (12) simultaneously enter into retaining connections with the corresponding profiles (2, 3) .

2. Profile connector (1) according to claim 1, **characterized in that** the pressing element (8) comprises a pressing surface (8a) which faces away from the sleeve axis (4), the distance of said pressing surface from the sleeve axis (4) decreasing towards the free end of the pressing element (8), and **in that** the at least one spreading element (12) is formed on the sleeve part (5) and comprises a contact surface (12a) which faces towards the sleeve axis (4) and which is adapted to the pressing surface (8a), the distance of said contact surface from the sleeve axis (4) likewise decreasing towards the free end of the spreading element (12), wherein, as the pressing element (8) moves in the sleeve part (5) in the direction towards the free end of the pressing element (8), the pressing surface (8a) presses the contact surface (12a) away from the sleeve axis (4) somewhat, which leads to the insertion portion (10) being clamped in the second profile (3).

3. Profile connector (1) according to claim 2, **characterized in that**, in a sectional plane containing the sleeve axis (4), the section lines of the pressing surface (8a) and of the contact surface (12a) with respect to the sleeve axis (4) enclose an angle in the range from 2° to 10°, preferably from 4° to 8°.

4. Profile connector (1) according to any one of claims 1 to 3, **characterized in that** the insertion portion (10) has at least two, but preferably four, spreading elements (12) arranged around the sleeve axis (4), said spreading elements being separated from one another by longitudinal gaps.

5. Profile connector (1) according to any one of claims 1 to 4, **characterized in that** the actuating device (11) in the base portion (9) of the sleeve part (5) comprises a bore (14) with a thread, which bore extends transversely, in particular perpendicularly, to the sleeve axis (4), and in said thread an adjusting screw (15) which acts on the bolt element (6).

6. Profile connector (1) according to claim 5, **characterized in that** the adjusting screw (15) preferably comprises a conically tapered free end (15a) and the bolt element (6) comprises a depression (16) which is adapted to the conical shape of the adjusting screw (15), wherein, in a sectional plane containing the sleeve axis (4) and the longitudinal axis of the adjusting screw (15), a pressing line of the conically tapered end (15a) of the adjusting screw (15) bears against a substantially identically oriented line of the depression (16).

7. Profile connector (1) according to claim 6, **characterized in that** the angle between the pressing line and the sleeve axis (4) lies in the range from 35° to 55°, but preferably in the range from 42° to 48°.

8. Profile connector (1) according to any one of claims 1 to 7, **characterized in that**, when the bolt element (6) is inserted into the sleeve element (5), the actuating device (11) can be adjusted such that all the elements of the profile connector (1) are connected to one another, wherein the assembled profile connector (1) can be inserted with the slot anchor (7) into the first profile (2) and with the insertion portion (10) into the second profile (3) and then the actuating device (11) can be actuated to achieve the two retaining connections.

9. Profile connector (1) according to any one of claims 1 to 8, **characterized in that** the profile connector (1) consists of three one-piece parts, namely the sleeve part (5), the bolt element (6), and an actuating part of the actuating device (11) that is movably mounted on the sleeve part (5).

## Revendications

1. Connecteur de profilés (1) avec un ancrage à rainure (7) pouvant être inséré dans une rainure longitudinale (2a) d'un premier profilé (2), une partie douille (5) recevant une section de l'ancrage à rainure (7) et s'étendant le long d'un axe de douille (4), un moyen d'actionnement (11) pour fixer l'ancrage à rainure (7) sur le premier profilé (2) et un moyen de fixation pour produire une liaison de retenue entre la partie douille (5) et un deuxième profilé (3) s'étendant transversalement au premier profilé (2), dans lequel l'ancrage à rainure (7) peut être introduit dans la rainure longitudinale (2a) dans une première orientation de rotation et est maintenu dans la rainure longitudinale (2a) dans une deuxième orientation de rotation, **caractérisé en ce que** la partie douille (5) comprend une section socle (9) et une section d'insertion (10) se raccordant l'une à l'autre dans la direction de l'axe de douille (4), la section socle (9) comprend une première surface de butée (9a) pour le premier profilé (2) transversalement à l'axe de douille (4), une deuxième surface de butée (9b) pour le deuxième profilé (3) et entre celles-ci une zone avec le moyen d'actionnement (11), le moyen de fixation comprend un élément de pression (8), l'ancrage à rainure (7) et l'élément de pression (8) sont formés sur un élément goujon (6) monté dans la partie douille (5) de manière mobile le long de l'axe de douille (4), la section d'insertion (10) de la partie douille (5) peut être insérée dans une cavité du deuxième profilé (3), dans la section d'insertion (10) est formé au moins un élément d'écartement (12) du moyen de fixation pouvant être pressé par l'élément de pression (8) transversalement à l'axe (4) de douille et, lors de la liaison du premier profilé (2) avec le deuxième profilé (3), le moyen d'actionnement (11) rend l'élément goujon (6) réglable dans la direction de l'axe de douille (4) de telle sorte que l'ancrage à rainure (7) et ledit au moins un élément d'écartement (12) entrent simultanément en liaison de retenue avec les profilés correspondants (2, 3).

2. Connecteur de profilés (1) selon la revendication 1, **caractérisé en ce que** l'élément de pression (8) comprend une surface de pression (8a) orientée à l'opposé de l'axe de douille (4), dont la distance par rapport à l'axe de douille (4) diminue en direction de l'extrémité libre de l'élément de pression (8), et que ledit au moins un élément d'écartement (12) est formé sur la partie douille (5) et comprend une surface de contact (12a) orientée vers l'axe de douille (4) et adaptée à la surface de pression (8a), dont la distance par rapport à l'axe de douille (4) diminue également en direction de l'extrémité libre de l'élément d'écartement (12), dans lequel, lors du mouvement de l'élément de pression (8) dans la partie douille (5) en direction de l'extrémité libre de l'élément de pression (8), la surface de pression (8a) écarte un peu la surface de contact (12a) de l'axe de douille (4), ce qui conduit au serrage de la section d'insertion (10) dans le deuxième profilé (3).

3. Connecteur de profilés (1) selon la revendication 2, **caractérisé en ce que** dans un plan de coupe avec l'axe de douille (4), les lignes d'intersection de la surface de pression (8a) et de la surface de contact (12a) forment un angle dans la plage de 2° à 10°, de préférence de 4° à 8°, avec l'axe de douille (4).

4. Connecteur de profilés (1) selon l'une des revendications 1 à 3, **caractérisé en ce que** la section d'insertion (10) présente au moins deux, mais de préférence quatre, éléments d'écartement (12) qui sont disposés autour de l'axe de douille (4) et séparés les uns des autres par des fentes longitudinales.

5. Connecteur de profilés (1) selon l'une des revendications 1 à 4, **caractérisé en ce que** le moyen d'actionnement (11) dans la section socle (9) de la partie douille (5) comprend un alésage (14) avec un filetage, qui s'étend transversalement, en particulier perpendiculairement, à l'axe de douille (4) et, dans ce filetage, une vis de réglage (15) agissant sur l'élément goujon (6).

6. Connecteur de profilés (1) selon la revendication 5, **caractérisé en ce que** la vis de réglage (15) comprend de préférence une extrémité libre (15a) rétrécie de manière conique et l'élément goujon (6) présente un renfoncement (16) adapté à la forme conique de la vis de réglage (15), dans lequel, dans un plan de coupe avec l'axe de douille (4) et l'axe longitudinal de la vis de réglage (15), une ligne de pression de l'extrémité (15a) rétrécie de manière conique de la vis de réglage (15) s'applique contre une ligne du renfoncement (16) orientée de manière sensiblement identique.

7. Connecteur de profilés (1) selon la revendication 6, **caractérisé en ce que** l'angle entre la ligne de pression et l'axe de douille (4) se situe dans la plage de 35° à 55°, mais de préférence dans la plage de 42° à 48°.

8. Connecteur de profilés (1) selon l'une des revendications 1 à 7, **caractérisé en ce que**, lorsque l'élément goujon (6) est inséré dans l'élément douille (5), le moyen d'actionnement (11) est réglable de telle sorte que tous les éléments du connecteur de profilés (1) soient reliés entre eux, dans lequel le connecteur de profilés (1) assemblé peut être inséré avec l'ancrage à rainure (7) dans le premier profilé (2) et avec la section d'insertion (10) dans le deuxième profilé (3), et le moyen d'actionnement (11) peut ensuite être actionné pour réaliser les deux liaisons de retenue.

9. Connecteur de profilés (1) selon l'une des revendications 1 à 8, **caractérisé en ce que** le connecteur de profilés (1) se compose de trois parties en une seule pièce, la partie douille (5), l'élément goujon (6) et une partie d'actionnement du moyen d'actionnement (11) montée de manière réglable sur la partie douille (5).
